# EUROPÄISCHE PATENTSCHRIFT

(11) **EP 1 469 614 B1**
(45) Veröffentlichungstag und Bekanntmachung des Hinweises auf die Patenterteilung: **02.11.2006**
(21) Anmeldenummer: 03008901.5
(22) Anmeldetag: 16.04.2003
(51) Int. Cl.: H04B 7/08

(54) **Rundfunkempfänger mit Antennen-Diversity und Verfahren zum Betrieb desselben**
Radio receiver with antenna diversity and method utilizing the same
Récepteur radio avec diversité d'antennes et procédé utilisant ledit récepteur

(43) Veröffentlichungstag der Anmeldung: 20.10.2004
(73) Patentinhaber: SIEMENS AKTIENGESELLSCHAFT, 80333 München (DE)
(72) Erfinder: Bänziger, Christiaan Marie Hubertus, 6041 PD Roermond (NL); Meijer, Pieter, 5625 ER Eindhoven (NL); Schlösser, Theodoor Antoon Jozef, 5655 JW Eindhoven (NL)

(56) Entgegenhaltungen:
- EP-A- 0 967 746
- EP-A- 1 150 440
- WO-A-02/078214

## Beschreibung

Die Erfindung betrifft ein Verfahren zum Betreiben eines Rundfunkempfängers sowie einen Kraftfahrzeugrundfunkempfänger für den Mehrantennenempfang nach dem Oberbegriff des Anspruchs 1.

Aus der EP 1 150 440 A1 ist ein Rundfunkempfänger für den Mehrantennenempfang mit Mitteln zur Auswahl eines bevorzugten Antennensignals aus einer Mehrzahl von Antennensignalen und mit einem ersten RF-Empfänger mit nachgeschaltetem A/D-Wandler zur Umsetzung des ausgewählten Antennensignals in ein erstes digitales Zwischenfrequenzsignal bekannt.

Beim Empfang von Rundfunksignalen in einem sich bewegenden Kraftfahrzeug treten fortlaufend Änderungen der Empfangsverhältnisse auf. Insbesondere kann der Rundfunkempfang durch den sogenannten Mehrwegeempfang gestört sein. Mehrwegeempfang wird durch Signalreflexionen erzeugt, die beispielsweise an Gebäuden, Bergen, Bäumen etc. erfolgen können. Das an einem bestimmten Ort empfangene Rundfunksignal besteht daher aus einer Überlagerung dieser unterschiedlichen Teilsignale, die hinsichtlich Amplitude und Phasenlage variieren. Die Überlagerung der unterschiedlichen Teilsignale in der Antenne kann daher zu einer Schwächung oder auch einer kompletten Auslöschung des gewünschten Rundfunksignals durch Interferenz führen. Es hat sich gezeigt, dass die Empfangsverhältnisse innerhalb kürzester Distanzen stark variieren können. In Kraftfahrzeugen wird daher häufig mehr als eine Antenne angebracht, und es wird dafür gesorgt, dass das stärkste Antennensignal dem Rundfunkempfänger zugeführt wird. Ein derartiges Verfahren ist als Antennen-Diversity-Verfahren bekannt.

Die Antennensignale werden hierbei einem Schaltelement zugeführt, das auf Grund der Empfangsfeldstärke das bevorzugte Antennensignal dem RF-Empfänger zuführt. Entsprechende Schaltkreise, die einen Mehrwegedetektor aufweisen, um das bevorzugte Antennensignal zu ermitteln, sind bekannt und können als integrierte Schaltkreise, beispielsweise Philips IC TEA 6101, bezogen werden. Ein digitaler Signalprozessor DSP beurteilt hierbei das digitalisierte Zwischenfrequenzsignal des RF-Empfängers und steuert den Umschalter entsprechend an.

Da bei diesem Verfahren die Antennen der Reihe nach ausgewählt werden, um die bevorzugte Antenne erkennen zu können, wird das zugrundeliegende Verfahren auch als Scanning-Antenna- Diversity-Verfahren bezeichnet.

Nachteilig ist bei diesem Scanning-Antenna-Diversity-Verfahren jedoch, dass jeder Wechsel zwischen den Antennen eine Empfangsstörung hervorruft und eine gewisse Zeit benötigt wird, bevor eine sichere Beurteilung der Signalqualität der ausgewählten Antenne möglich ist.

Darüber hinaus ist ein sogenanntes Phase-Diversity-Verfahren bekannt, um den Rundfunkempfang im Kraftfahrzeug zu verbessern. Phase-Diversity kann den Empfang unter Mehrwegebedingungen dadurch verbessern, dass die Antennensignale von zwei oder auch mehr räumlich getrennten Antennen nach Anpassung der Phase und Amplitude der empfangenen Signale kombiniert werden. Eine direkte derartige Kombination von zwei Antennensignalen ist jedoch aufwendig.

Aus der WO 02/078214 A1 ist ein Verfahren bzw. ein Rundfunkempfänger bekannt, bei dem zwei Betriebsmodi vorliegen. In einem ersten Betriebsmodus wird aus einem ersten Antennensignal einer ersten Antenne ein erstes Zwischenfrequenzsignal und aus einem zweiten Antennensignal einer zweiten Antenne ein zweites Zwischenfrequenzsignal erzeugt, wobei die beiden Zwischenfrequenzsignale unabhängig voneinander zur Wiedergabe eines Rundfunkprogramms oder zum Empfang von RDS-Daten genutzt werden. Es besteht eine feste Zuordnung von Antenne zu Tuner. In einem zweiten Betriebsmodus wird das erste Antennensignal der ersten Antenne und das zweite Antennensignal der zweiten Antenne jeweils in ein Zwischenfrequenzsignal umgesetzt, die Zwischensignale werden digitalisiert und aus den digitalisierten Signalen wird ein drittes Zwischenfrequenzsignal erzeugt, das unter schlechten Empfangsbedingungen zur Wiedergabe eines Rundfunkprogramms genutzt wird.

Aufgabe der Erfindung ist es daher, ein Verfahren zum Betreiben einer Antennen-Diversity-Schaltung und einen Kraftfahrzeugrundfunkempfänger für den Mehrantennenempfang anzugeben, mit denen der Empfang unter schwierigen Empfangsbedingungen verbessert wird und die Nachteile der beschriebenen Diversity-Verfahren minimiert werden.

Die Aufgabe wird gelöst durch ein Verfahren mit den Merkmalen des Anspruchs 1 sowie durch einen kraftfahrzeug-Rundfunk empfänger mit den Merkmalen des Anspruchs 7.

Mit dem erfindungsgemäßen Verfahren werden die Vorteile des Scanning-Antenna-Diversity-Verfahrens und des Phase-Diversity-Verfahrens miteinander kombiniert. In einem ersten Betriebsmodus, der dem Scanning-Antenna-Diversity-Verfahren entspricht, wird, wie es von diesem bekannt ist, ein Antennensignal einer bevorzugten Antenne ausgewählt. Dies erfolgt über einen Antennenumschalter, der von einer Beurteilungseinrichtung für die Signalqualität in üblicher Weise angesteuert wird. Darüber hinaus ist ein zweiter Betriebsmodus vorgesehen, der ein Phase-Diversity-Verfahren beinhaltet. Hierbei werden ein erstes und ein zweites Antennensignal einer ersten bzw. zweiten Antenne aus der Mehrzahl von Antennen in jeweils ein Zwischenfrequenzsignal umgesetzt. Hierzu sind zwei RF-Empfänger erforderlich. Die beiden Zwischenfrequenzsignale werden jeweils digitalisiert und die digitalisierten Signale werden durch Addition miteinander kombiniert. Das so gewonnene Signal wird dann der üblichen weiteren Signalverarbeitung eines Rundfunkempfängers zugeführt. Die Auswahl zwischen dem ersten und dem zweiten Betriebsmodus erfolgt auf Grund der Empfangsverhältnisse. So ist vorgesehen, dass bei massiven Störungen des Rundfunkempfangs durch Mehrwegeempfang der zweite Betriebsmodus gewählt wird. Im zweiten Betriebsmodus wird der Einfluss des Mehrwegeempfangs durch ein Phase-Diversity-Verfahren weitgehend minimiert. Unter weniger schwierigen Mehrwegeempfangsbedingungen wird dagegen der erste Betriebsmodus ausgewählt. Während im zweiten Betriebsmodus zwei RF-Empfänger benötigt werden, ist im ersten Betriebsmodus zur Erzeugung des Rundfunksignals nur einer der beiden RF-Empfänger erforderlich. Der zweite Empfänger kann daher im ersten Betriebsmodus auf eine andere Empfangsfrequenz eingestellt werden. Hierdurch können zum Beispiel die Empfangsverhältnisse auf alternativen Empfangsfrequenzen ständig geprüft werden. Weiterhin kann der zweite RF-Empfänger auch zum Empfang von RDS-Daten genutzt werden. Die Erfindung kombiniert daher die Vorteile eines herkömmlichen Scanning-Antenna-Diversity-Doppelempfängers mit den Vorteilen eines Phase-Diversity-Verfahrens unter massiven Mehrwegestörungen.

Für die Auswahl zwischen dem ersten und dem zweiten Betriebsmodus auf Grund der Empfangsverhältnisse können verschiedene Kriterien herangezogen werden. Insbesondere kann die Information der bekannten Beurteilungseinrichtung im Scanning-Antenna-Diversity-Verfahren genutzt werden. Wird während einer vorgegebenen Zeitspanne nur gelegentlich ein Mehrwegeempfang detektiert, so wird die Antennen-Diversity-Schaltung im ersten Betriebsmodus betrieben. Wird dagegen innerhalb einer festgelegten Zeitspanne kontinuierlicher Mehrwegeempfang detektiert, so wird der zweite Betriebsmodus aktiviert.

In einer alternativen Ausführungsform kann auch die Aktivität der Steuerkreise innerhalb des Phase-Diversity-Algorithmus innerhalb einer definierten Zeitspanne geprüft werden, oder die Umschaltrate zwischen den verschiedenen Antennen im Scanning-Antenna-Diversity-Verfahren wird innerhalb einer vorgegebenen Zeitspanne beurteilt. Abhängig vom Ergebnis dieser Beurteilung kann ein Umschalten zwischen dem ersten und dem zweiten Betriebszustand erfolgen.

Weiterhin kann ein Umschalten vom zweiten in den ersten Betriebszustand auch dann erfolgen, wenn durch den Rundfunkempfänger alternative Empfangsfrequenzen überprüft werden sollen. Im ersten Betriebsmodus steht der zweite Empfänger hierfür zur Verfügung.

Weiterhin kann ein Umschalten in den zweiten Betriebsmodus dann erfolgen, wenn die Feldstärke einen vorgegebenen Pegel unterschreitet.

Die beispielhaft angegebenen Kriterien zur Umschaltung zwischen dem ersten und dem zweiten Betriebszustand können darüber hinaus auch miteinander kombiniert werden.

Ein erfindungsgemäßer Kraftfahrzeugrundfunkempfänger weist die in Anspruch 7 angegebenen Merkmale auf. Der Rundfunkempfänger enthält einen ersten und einen zweiten RF-Empfänger, denen jeweils ein A/D-Wandler nachgeschaltet ist. Dem ersten RF-Empfänger wird ein bevorzugtes Antennensignal aus einer Mehrzahl von Antennensignalen zugeführt, um im ersten Betriebsmodus den besten Empfang sicherzustellen. Im zweiten Betriebsmodus wird jedem der beiden RF-Empfänger das Signal jeweils einer Antenne zugeführt. Die digitalisierten Zwischenfrequenzsignale werden anschließend addiert. Die Umschaltung zwischen dem ersten und dem zweiten Betriebsmodus erfolgt wie oben bereits erläutert. Durch Verstärker und Phasenschieber können die beiden zu addierenden Signale des zweiten Betriebsmodus hinsichtlich Phase und Amplitude aneinander angepasst werden. Weitere vorteilhafte Ausgestaltungen sind in den Unteransprüchen beschrieben.

Die Erfindung wird nachfolgend anhand eines Ausführungsbeispiels und der Zeichnung näher erläutert. Es zeigen:
- Figur 1: die Antennen-Diversity-Schaltung eines erfindungsgemäßen Rundfunkempfängers,
- Figur 2: ein Blockschaltbild eines Rundfunkempfängers.

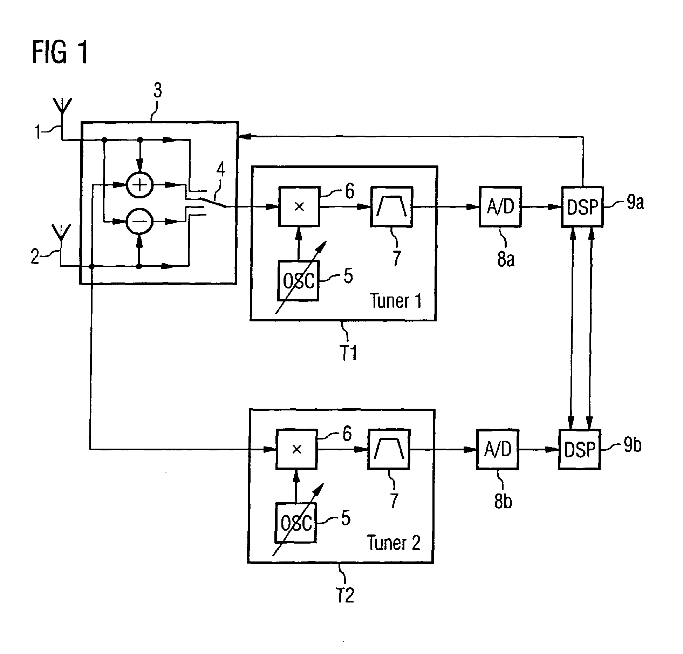

Figur 1 zeigt die Antennen-Diversity-Schaltung eines Rundfunkempfängers. Zwei Antennen 1, 2 sind mit einem Antennenumschalter 3 verbunden. Der Antennenumschalter 3 ist derart ausgebildet, dass entweder das Signal der Antenne 1 oder das Signal der Antenne 2 oder ein Summensignal der beiden Antennen 1, 2 oder ein Differenzsignal der beiden Antennen 1, 2 mit einem Ausgang 4 des Antennenumschalters 3 verbunden wird. Das am Ausgang 4 des Antennenumschalters 3 anstehende Signal wird einem ersten RF-Empfänger T1 zugeführt. Der RF-Empfänger T1 weist in bekannter Weise einen Oszillator 5, einen Mischer 6 und ein Bandpassfilter 7 auf. Die gewünschte Empfangsfrequenz wird hierbei durch mischen mit der Frequenz des einstellbaren Oszillators 5 im Mischer 6 auf eine niedrigere Frequenz, die sogenannte Zwischenfrequenz, heruntergesetzt. Die Funktionsweise eines entsprechenden RF-Empfängers ist hinreichend bekannt und muss nicht im Detail beschrieben werden. Das Ausgangssignal des RF-Empfängers T1 wird einem A/D-Wandler 8a zugeführt und von diesem in ein digitales Signal umgewandelt. Dieses digitale Signal wird einem digitalen Signalprozessor (DSP) 9a zugeführt. Im DSP 9a erfolgt eine Beurteilung der Empfangsqualität. Im ersten Betriebsmodus wird die Empfangsqualität im DSP 9a mit einem Vorgabewert verglichen, wie dies in Form eines Mehrwegesensors bei bekannten Scanning-Diversity-ICs bekannt ist. Entspricht das Signal nicht den Mindestanforderungen, so gibt der DSP 9a ein Umschaltsignal an den Antennenumschalter 3, wodurch das Antennensignal einer anderen Antenne dem RF-Empfänger T1 zugeführt wird. Auf diese Weise kann von den vorhandenen Antennensignalen das bevorzugte Antennensignal mit den besten Empfangseigenschaften ausgewählt werden. Dies entspricht dem ersten Betriebsmodus des Rundfunkempfängers.

Weiterhin weist der Rundfunkempfänger einen zweiten RF-Empfänger T2 auf. Bei dem dargestellten Zweiantennensystem ist der zweite RF-Empfänger T2 fest mit der Antenne 2 verbunden. Der RF-Empfänger T2 weist ebenfalls einen Oszillator 5, einen Mischer 6 und ein Bandpassfilter 7 auf. Dem RF-Empfänger T2 ist ebenfalls ein A/D-Wandler 8b nachgeschaltet. Der A/D-Wandler 8b wandelt das analoge Ausgangssignal des RF-Empfänger T2 in ein digitales Signal um, das dem DSP 9b zugeführt wird. Die DSP 9a und 9b stehen miteinander in Wechselwirkung. Im ersten Betriebsmodus kann der zweite RF-Empfänger T2 beispielsweise zum Testen der Empfangsbedingungen auf einer alternativen Empfangsfrequenz benutzt werden. Weiterhin kann der RF-Empfänger T2 für verschiedene Funktionen des RDS bzw. RDS-TMC Rundfunkübertragungssystems genutzt werden.

Im zweiten Betriebsmodus werden dem RF-Empfänger T1 und dem RF-Empfänger T2 Antennensignale von verschiedenen Antennen zugeleitet. Beispielsweise wird dem RF-Empfänger T1 das Antennensignal der Antenne 1 zugeleitet. Der Antennenumschalter 3 wird hierzu von dem DSP 9a entsprechend angesteuert. Dem RF-Empfänger T2 werden die Antennensignale der Antenne 2 zugeleitet. Die Antennensignale der Antenne 1 bzw. 2 werden durch die RF-Empfänger T1 bzw. T2 in erste und zweite Zwischenfrequenzsignale umgewandelt. Die beiden Zwischenfrequenzsignale werden durch die A/D-Wandler 8a, 8b jeweils in digitale Zwischenfrequenzsignale umgewandelt und den zugehörigen DSP 9a bzw. 9b zugeleitet. Die DSP 9a, 9b können hierbei als gemeinsamer DSP 9 ausgebildet sein. Im DSP 9 werden die digitalisierten Zwischenfrequenzsignale der A/D-Wandler 8a, 8b miteinander kombiniert und als digitales Zwischenfrequenzrundfunksignal den weiteren Signalverarbeitungskomponenten des Rundfunkempfängers zugeführt. Die Umschaltung zwischen erstem und zweitem Betriebszustand erfolgt durch die DSP 9.

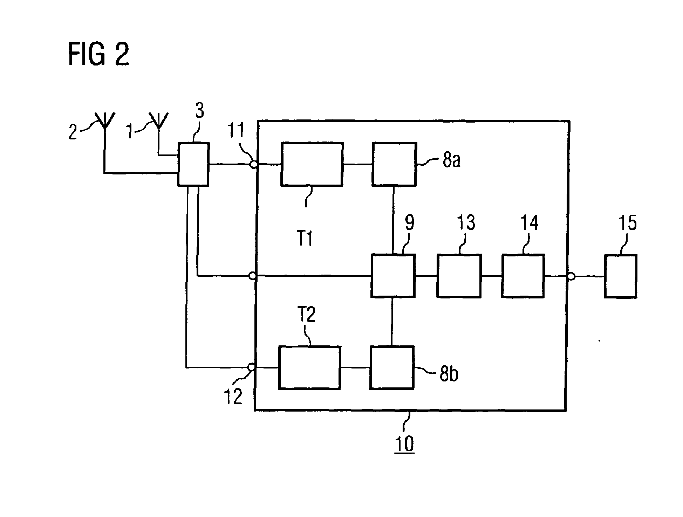

Figur 2 zeigt ein Blockschaltbild eines Rundfunkempfängers 10. Der Rundfunkempfänger 10 weist Antennensignaleingänge 11, 12 auf. Die Antennensignaleingänge 11, 12 sind mit einem externen Antennenumschalter 3 verbunden, an den Antennen 1, 2 angeschlossen sind. Die an den Antennensignaleingängen 11, 12 anliegenden Antennensignale werden einem ersten bzw. zweiten RF-Empfänger T1, T2 zugeleitet, deren Ausgangssignale nach Digitalisierung in den A/D-Wandlern 8 einem DSP 9 zugeführt werden. Das Ausgangssignal des DSP 9 wird einer Signalverarbeitungseinrichtung 13 zugeführt. In der Signalsverarbeitungseinrichtung 13 wird in bekannter Weise aus dem Zwischenfrequenzsignal ein akustisches Signal gewonnen, das über einen oder mehrere Verstärker 14 einem oder mehreren Lautsprechern 15 zugeführt wird.

Der erfindungsgemäße Rundfunkempfänger mit zwei RF-Empfängern wird abhängig von den Empfangsbedingungen im Scanning-Antenna-Diversity-Modus oder im Phase-Diversity-Modus betrieben. Hierdurch wird abhängig von den Empfangsbedingungen optimaler Rundfunkempfang auch unter schwierigsten Bedingungen erreicht, während gleichzeitig unter weniger schwierigen Empfangsbedingungen der zweite RF-Empfänger für weitere Aufgaben, insbesondere auch auf einer anderen Empfangsfrequenz, eingesetzt werden kann.

## Patentansprüche

1. Verfahren zum Betreiben eines Rundfunkempfängers in einem ersten und einem zweiten Betriebsmodus, wobei
- im ersten Betriebsmodus aus einem Antennensignal einer ersten Antenne ein erstes Zwischenfrequenzsignal und aus einem zweiten Antennensignal einer zweiten Antenne ein zweites Zwischenfrequenzsignal erzeugt wird und das erste und das zweite Zwischenfrequenzsignal unabhängig voneinander genutzt werden,
- im zweiten Betriebsmodus das erste Antennensignal einer von der zweiten Antenne verschiedenen ersten Antenne und das zweite Antennensignal der zweiten Antenne in jeweils ein Zwischenfrequenzsignal umgesetzt wird, die Zwischenfrequenzsignale digitalisiert werden und aus den digitalisierten Signalen ein drittes Zwischenfrequenzsignal erzeugt wird und das dritte Zwischenfrequenzsignal genutzt wird,
- die Auswahl des ersten und des zweiten Betriebsmodus auf Grund der Empfangsverhältnisse erfolgt,
**dadurch gekennzeichnet , dass** im ersten Betriebsmodus ein Scanning- Antenna-Diversity-Verfahren durchgeführt wird mit Auswahl einer bevorzugten Antenne aus einer Mehrzahl von Antennen anhand der Empfangsqualität und Erzeugung des ersten Zwischenfrequenzsignals aus dem Antennensignal der bevorzugten Antenne und dass die Verknüpfung des digitalisierten ersten und zweiten Zwischenfrequenzsignals zu dem dritten zwischenfrequenzsignal im zweiten Betriebsmodus durch Addition erfolgt.

2. Verfahren nach Anspruch 1, **dadurch gekennzeichnet, dass** im zweiten Betriebsmodus vor der Addition eine Anpassung von Phase und Amplitude der Zwischenfrequenzsignale erfolgt.

3. Verfahren nach Anspruch 1 oder 2, **dadurch , gekennzeichnet, dass** die Auswahl des Betriebsmodus auf Grund der Häufigkeit des Auftretens von Mehrwegeempfang innerhalb einer vorgegebenen Zeitspanne erfolgt.

4. Verfahren nach einem der vorhergehenden Ansprüche,
**dadurch gekennzeichnet , dass** ein Umschalten in den zweiten Betriebszustand erfolgt, wenn im ersten Betriebszustand eine Wechselrate des bevorzugten Antennensignals einen Vorgabewert übersteigt.

5. Verfahren nach einem der vorhergehenden Ansprüche,
**dadurch gekennzeichnet , dass** ein Umschalten in den zweiten Betriebsmodus erfolgt, wenn die Feldstärke einen vorgegebenen Pegel unterschreitet.

6. Verfahren nach einem der vorhergehenden Ansprüche,
**dadurch gekennzeichnet , dass** zur Prüfung von alternativen Empfangsfrequenzen ein Umschalten in den ersten Betriebszustand erfolgt.

7. Kraftfahrzeug-Rundfunkempfänger für den Mehrantennenempfang mit einem ersten RF-Empfänger (T1) mit nachgeschaltetem A/D-Wandler (8a) zur Umsetzung eines Antennensignals einer ersten Antenne in ein erstes digitales Zwischenfrequenzsignal und einem zweiten RF-Empfänger (T2) mit nachgeschaltetem A/D-Wandler (8b) zur Umsetzung eines Antennensignals einer zweiten Antenne in ein zweites digitales Zwischenfrequenzsignal sowie Mitteln zur Erzeugung eines dritten digitalen Zwischenfrequenzsignals aus dem ersten und zweiten digitalen Zwischenfrequenzsignal und Mitteln zur Auswahl zwischen einem ersten und einem zweiten Betriebsmodus, wobei im ersten Betriebsmodus des Rundfunkempfängers das erste und das zweite Zwischenfrequenzsignal unabhängig voneinander genutzt werden und im zweiten Betriebsmodus des Rundfunkempfängers den beiden RF-Empfängern Signale von verschiedenen Antennen zugeleitet werden und das dritte Zwischenfrequenzsignal genutzt wird,
**dadurch gekennzeichnet,**
**dass** der Rundfunkempfänger ferner Mittel zur Auswahl einer bevorzugten Antenne aus einer Mehrzahl von Antennen und zum Verbinden der bevorzugten Antenne mit dem ersten RF-Empfänger (T1) und Mittel zur Durchführung eines Scanning-Antenna-Diversity-Verfahrens im ersten Betriebsmodus enthält und die Erzeugung des dritten Zwischenfrequenzsignals im zweiten Betriebsmodus durch Addition des ersten und des zweiten Zwischenfrequenzsignals erfolgt.

8. Rundfunkempfänger nach Anspruch 7, **dadurch gekennzeichnet , dass** die Mittel zur Erzeugung des dritten digitalen Zwischenfrequenzsignals eine Anpassung der Phase und der Amplitude der zu addierenden Signale vornehmen.

9. Rundfunkempfänger nach Anspruch 7 oder 8, **dadurch gekennzeichnet , dass** der erste und der zweite RF-Empfänger (T1, T2) im ersten Betriebsmodus zumindest zeitweise auf unterschiedliche Empfangsfrequenzen abstimmbar sind.

10. Rundfunkempfänger nach Anspruch 9, **dadurch gekennzeichnet , dass** der zweite Empfänger (T2) im ersten Betriebsmodus zum Empfang von RDS-Daten auf der von der Empfangsfrequenz des ersten Empfängers verschiedenen Empfangsfrequenz ausgelegt ist.

11. Rundfunkempfänger nach einem der vorhergehenden Ansprüche, **dadurch gekennzeichnet , dass** die Mittel zur Auswahl des Betriebsmodus die Auswahl auf Grund der Häufigkeit des Auftretens von Mehrwegeempfang innerhalb einer vorgegebenen Zeitspanne vornehmen.

12. Rundfunkempfänger nach einem der vorhergehenden Ansprüche, **dadurch gekennzeichnet , dass**
die Mittel zur Auswahl des Betriebsmodus die Auswahl auf Grund einer Wechselrate des bevorzugten Antennensignals vornehmen.

13. Rundfunkempfänger nach einem der vorhergehenden Ansprüche, **dadurch gekennzeichnet , dass**
die Mittel zur Auswahl des Betriebsmodus die Auswahl auf Grund eines Feldstärkepegels vornehmen.

14. Rundfunkempfänger nach einem der vorhergehenden Ansprüche, **dadurch gekennzeichnet , dass** für die Dauer einer Prüfung von alternativen Empfangsfrequenzen der Rundfunkempfänger im ersten Betriebsmodus betrieben wird.

## Claims

1. Method for operating a radio receiver in a first and a second operating mode, whereby
- in the first operating mode, a first intermediate frequency signal is generated from an antenna signal of a first antenna and a second intermediate frequency signal is generated from a second antenna signal of a second antenna, and the first and second intermediate frequency signals are used independently from one another,
- in the second operating mode, the first antenna signal of a first antenna other than the second antenna, and the second antenna signal of the second antenna are in each case converted into an intermediate frequency signal, the intermediate frequency signals are digitized and a third intermediate frequency signal is generated from the digitized signals, and the third intermediate frequency signal is used,
- the selection of the first and second operating modes is carried out on the basis of the reception conditions,
**characterized in that**, in the first operating mode, a scanning antenna diversity method is carried out with selection of a preferred antenna from a plurality of antennas on the basis of the reception quality and with generation of the first intermediate frequency signal from the antenna signal of the preferred antenna, and that the combination of the digitized first and second intermediate frequency signals to form the third intermediate frequency signal in the second operating mode is carried out through addition.

2. Method according to Claim 1, **characterized in that** adaptation of the phase and amplitude of the intermediate frequency signals is carried out in the second operating mode prior to the addition.

3. Method according to Claim 1 or 2, **characterized in that** the selection of the operating mode is carried out on the basis of the frequency of occurrence of multipath reception within a predefined time span.

4. Method according to one of the preceding claims, **characterized in that** a changeover to the second operating mode is carried out if a changeover rate of the preferred antenna signal exceeds a predefined value in the first operating mode.

5. Method according to one of the preceding claims, **characterized in that** a changeover to the second operating mode is carried out if the field strength falls below a predefined level.

6. Method according to one of the preceding claims, **characterized in that** a changeover to the first operating mode is carried out to check alternative reception frequencies.

7. Motor vehicle radio receiver for multiple antenna reception with a first RF receiver (T1) with a downstream A/D converter (8a) to convert an antenna signal of a first antenna into a first digital intermediate frequency signal and a second RF receiver (T2) with a downstream A/D converter (8b) to convert an antenna signal of a second antenna into a second digital intermediate frequency signal, and means to generate a third digital intermediate frequency signal from the first and second digital intermediate frequency signals and means for selection between a first and a second operating mode, whereby, in the first operating mode of the radio receiver, the first and the second intermediate frequency signals are used independently from one another and, in the second operating mode of the radio receiver, signals from different antennas are fed to the two RF receivers and the third intermediate frequency signal is used,
**characterized in that**
the radio receiver furthermore has means for selecting a preferred antenna from a plurality of antennas and for connecting the preferred antenna to the first RF receiver (T1), and means for carrying out a scanning antenna diversity method in the first operating mode, and the generation of the third intermediate frequency signal is carried out in the second operating mode through addition of the first and the second intermediate frequency signals.

8. Radio receiver according to Claim 7, **characterized in that** the means for generating the third digital intermediate frequency signal carry out an adaptation of the phase and amplitude of the signals which are to be added together.

9. Radio receiver according to Claim 7 or 8, **characterized in that** the first and the second RF receivers (T1, T2) can be tuned in the first operating mode at least temporarily to different reception frequencies.

10. Radio receiver according to Claim 9, **characterized in that** the second receiver (T2) is designed in the first operating mode to receive RDS data on the reception frequency which differs from the reception frequency of the first receiver.

11. Radio receiver according to one of the preceding claims, **characterized in that** the means for selecting the operating mode carry out the selection on the basis of the frequency of occurrence of multipath reception within a predefined time span.

12. Radio receiver according to one of the preceding claims, **characterized in that** the means for selecting the operating mode carry out the selection on the basis of a changeover rate of the preferred antenna signal.

13. Radio receiver according to one of the preceding claims, **characterized in that** the means for selecting the operating mode carry out the selection on the basis of a field strength level.

14. Radio receiver according to one of the preceding claims, **characterized in that** the radio receiver is operated in the first operating mode for the duration of a check of alternative reception frequencies.

## Revendications

1. Procédé permettant d'exploiter un récepteur de radiodiffusion dans un premier et dans un second mode de fonctionnement, où
- dans le premier mode de fonctionnement, à partir d'un signal d'antenne d'une première antenne, on génère un premier signal de fréquence intermédiaire et, à partir d'un deuxième signal d'antenne d'une deuxième antenne, on génère un deuxième signal de fréquence intermédiaire et le premier et le deuxième signal de fréquence intermédiaire sont exploités indépendamment l'un de l'autre,
- dans le second mode de fonctionnement, le premier signal d'antenne d'une première antenne, différente de la seconde antenne, et le deuxième signal d'antenne de la seconde antenne sont convertis chacun en un signal de fréquence intermédiaire, les signaux de fréquence intermédiaire sont numérisés et, à partir des signaux numériques, on génère un troisième signal de fréquence intermédiaire et le troisième signal de fréquence intermédiaire est exploité,
- la sélection entre le premier et le second mode de fonctionnement se fait sur la base des conditions de réception,
**caractérisé par** le fait q u e , dans le premier mode de fonctionnement, on exécute un procédé à diversité d'antenne à balayage (ou Scanning-Antenna-Diversity), avec sélection d'une antenne préférentielle parmi une pluralité d'antennes à l'aide de la qualité de réception et production du premier signal de fréquence intermédiaire à partir du signal d'antenne de l'antenne préférentielle, et que la combinaison du premier et du second signal numérisé de fréquence intermédiaire pour former un troisième signal de fréquence intermédiaire se fait, dans le deuxième mode de fonctionnement, par addition.

2. Procédé selon la revendication 1 **caractérisé par le fait que** , dans le deuxième mode de fonctionnement, avant l'addition, on procède à une adaptation de phase et d'amplitude des signaux de fréquence intermédiaire.

3. Procédé selon la revendication 1 ou 2, **caractérisé par le fait que** le choix du mode de fonctionnement se fait sur la base de la fréquence d'apparition d'une réception à plusieurs voies pendant un intervalle de temps donné.

4. Procédé selon l'une des revendications précédentes, **caractérisé par le fait que** une inversion dans le deuxième état de fonctionnement a lieu lorsque, dans le premier état de fonctionnement, un taux de changement du signal d'antenne préférentiel dépasse une valeur de référence.

5. Procédé selon l'une des revendications précédentes, **caractérisé par le fait que** une inversion dans le deuxième mode de fonctionnement a lieu lorsque l'intensité du champ devient inférieure à un niveau donné.

6. Procédé selon l'une des revendications précédentes, **caractérisé par le fait que**, pour vérifier des fréquences de réception de rechange, on procède à une inversion dans le premier état de fonctionnement.

7. Récepteur de radiodiffusion pour véhicule automobile prévu pour la réception sur plusieurs antennes, comportant un premier récepteur de fréquence radio (T1), suivi d'un convertisseur analogique/numérique (8a) destiné à convertir un signal d'antenne d'une première antenne en un première signal numérique de fréquence intermédiaire, et un deuxième récepteur de fréquence radio (T2), suivi d'un convertisseur analogique/ numérique (8b) destiné à convertir un signal d'antenne d'une deuxième antenne en un deuxième signal numérique de fréquence intermédiaire, ainsi que des moyens pour générer un troisième signal numérique de fréquence intermédiaire à partir du premier et du deuxième signal numérique de fréquence intermédiaire et des moyens pour choisir entre un premier et un deuxième mode de fonctionnement, le premier et le deuxième signal de fréquence intermédiaire étant, dans le premier mode de fonctionnement du récepteur de radiodiffusion, exploités indépendamment l'un de l'autre et des signaux d'antennes différentes étant, dans le deuxième mode de fonctionnement du récepteur de radiodiffusion, appliqués aux deux récepteurs de fréquence radio et le troisième signal de fréquence intermédiaire étant exploité,
**caractérisé par le fait que** le récepteur de radiodiffusion renferme, en outre, des moyens pour sélectionner une antenne préférentielle parmi une pluralité d'antennes et pour relier l'antenne préférentielle au premier récepteur de fréquence radio (T1) et des moyens pour exécuter, dans le premier mode de fonctionnement, un procédé à diversité d'antenne à balayage (ou Scanning-Antenna-Diversity) et générer, dans le deuxième mode de fonctionnement, le troisième signal de fréquence intermédiaire par addition du premier et du deuxième signal de fréquence intermédiaire.

8. Récepteur de radiodiffusion selon la revendication 7, **caractérisé par le fait que** les moyens destinés à générer le troisième signal numérique de fréquence intermédiaire procèdent à une adaptation en phase et en amplitude des signaux à additionner.

9. Récepteur de radiodiffusion selon la revendication 7 ou 8
**caractérisé par** le fait q u e le premier et le second récepteur de fréquence radio (T1, T2) peuvent être, dans le premier mode de fonctionnement, accordés, au moins temporairement, sur des fréquences de réception différentes.

10. Récepteur de radiodiffusion selon la revendication 9 **caractérisé par le fait que** le second récepteur (T2) est conçu pour la réception, dans le premier mode de fonctionnement, de données RDS sur la fréquence de réception différente de la fréquence de réception du premier récepteur.

11. Récepteur de radiodiffusion selon l'une des revendications précédentes **caractérisé par** le fait q u e les moyens destinés à la sélection du mode de fonctionnement procèdent à la sélection sur la base de la fréquence d'apparition d'une réception sur plusieurs voies pendant une période de temps donnée.

12. Récepteur de radiodiffusion selon l'une des revendications précédentes **caractérisé par** le fait q u e les moyens destinés à la sélection du mode de fonctionnement procèdent à la sélection sur la base d'un taux de changement de signal préférentiel d'antenne.

13. Récepteur de radiodiffusion selon l'une des revendications précédentes **caractérisé par** le fait q u e les moyens destinés à la sélection du mode de fonctionnement procèdent à la sélection sur la base d'un niveau de l'intensité du champ.

14. Récepteur de radiodiffusion selon l'une des revendications précédentes **caractérisé par le fait que**, pour la durée d'un contrôle de fréquences de réception de rechange, le récepteur de radiodiffusion est exploité dans le premier mode de fonctionnement.
